# EUROPEAN PATENT APPLICATION

(11) **EP 0 831 497 A1**
(43) Date of publication of application: **25.03.1998**
(21) Application number: 97917493.5
(22) Date of filing: 26.03.1997
(51) Int. Cl.: G21C 3/326, G21C 3/00, G21C 1/00

(54) **FUEL ELEMENT ASSEMBLY FOR A NUCLEAR REACTOR AND A NUCLEAR REACTOR**

(30) Priority: 28.03.1996 RU 96105355; 28.03.1996 RU 96105356
(71) Applicant: Gorbatykh, Valery Pavlovich, Moscow, 127434 (RU); Baibakov, Vladislav Dmitrievich, Moscow, 109129 (RU); Mansur, Shariflu Naser, Moscow, 111020 (RU); Fedichkin, Nikita Valentinovich, Moscow, 113602 (RU)
(72) Inventor: Gorbatykh, Valery Pavlovich, Moscow, 127434 (RU); Baibakov, Vladislav Dmitrievich, Moscow, 109129 (RU); Mansur, Shariflu Naser, Moscow, 111020 (RU); Fedichkin, Nikita Valentinovich, Moscow, 113602 (RU)
(74) Representative: BOVARD AG - Patentanwälte
(86) International application number: RU9700088
(87) International publication number: WO9736301

(57) **Abstract**

Heat-releasing assembly has an asymmetrical in plan fuel material distribution and is assembled from polytypical as to nuclides concentration in the nuclear fuel elements that are arranged so that they form two subcores with different values of nuclear fuel volume-averaged nuclides concentration relative to the plane passing through the central longitudinal axis of the assembly, the nuclear reactor containing in the core at least some above-mentioned "asymmetrical" assemblies that are oriented by the subcore with the lesser concentration of the fissionable nuclides in the nuclear fuel in the direction of the central longitudinal axis of the core and the heat-releasing assemblies of the peripheral row bordering with the side reflector can have the opposite orientation with the direction of the subcore with the lesser concentration of fissionable nuclides from the central longitudinal axis. Besides at least some polytypical heat-releasing elements forming "asymmetrical" heat-releasing assemblies can be made with nuclear fuel containing depleting absorber.

## Description

### FIELD OF THE INVENTION.

The invention relates to the field of nuclear power industry and can be used for forming any nuclear reactors with asymmetrical as to arranging fuel material heat - releasing assemblies, e.g. the VVER-440 or VVER-1000 water-moderated water-cooled reactor.

### DESCRIPTION OF THE PRIOR ART.

From prior art there are known heat-releasing assemblies of a nuclear reactor where forming the qualities of fuel elements in the assembly cross-section provides for reducing nonuniformity of energy release due to arranging fuel elements with reduced enrichment nuclear fuel in the peripheral row and/or in the corner sections of the assembly

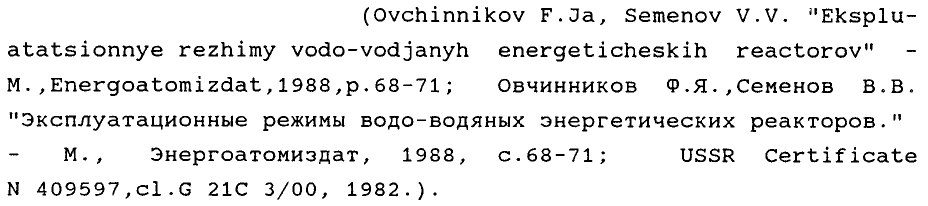

However the efficiency of reducing nonuniformity of heat release distribution in a reactor when using such heat-releasing assemblies is not high enough.

There is also known a heat-releasing assembly containing polytypical fuel elements characterized in asymmetrical fuel distribution (The USSR Certificate N 1078938, cl.G 21C 3/00, 1987).

Besides asymmetrical distribution of different as to chemical composition fuel relative to the lateral plane of the assembly is inherent to every fuel element. Fuel elements are arranged in the assembly in such a way that some of them have greater value of nuclides concentration in the nuclear fuel in the top part of the assembly above its lateral plane than in the lower part and the others have greater value in the lower part and it permits to reduce the axial nonuniformity of heat release in a reactor if they are placed in a certain way in the core but it doesn't influence noticeably the radial distribution of heat release.

The core usually forms a nuclear reactor along the radial (concentric) subcores that are arranged from heat-releasing assemblies having the same dimensions but differing in fuel material or uranium enrichment.

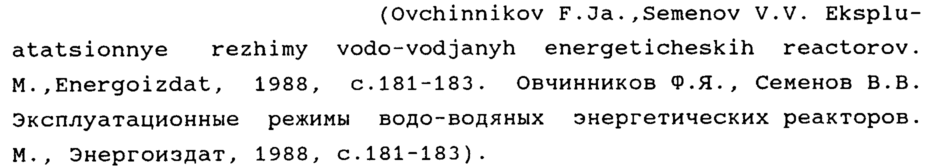

A certain reduction of heat release nonuniformity along the radius of the reactor and a pronounced depth of the fuel burnup can be achieved with such a zone arrangement of the core due to periodic overloading of the heat-releasing assemblies according to the well-known methods. However the opportunity of a well-known zone-after-zone flattening of energy release distribution is limited because of increasing neutrons leakage from the core which doesn't permit to improve substantially the reactor technical-and-economic indexes.

The analogue most close to the invention is a nuclear reactor comprising the reactor core with placed in it differently oriented ( about the lateral plane ) heat-releasing assemblies with nonuniform fuel material distribution along the hight in the fuel elements. The USSR Certificate N 1078938, cl. G21C 3/00, 1987.

This solution permits to reduce substantially the axial nonuniformity of energy release but doesn't affect much the radial distribution of heat release in the core and therefore the solution has only limited possibilities of improving economic indexes of the nuclear reactor performance.

### SUMMARY OF THE INVENTION.

The purpose of the invention is increasing the efficiency of using nuclear fuel, flattening the radial distribution of the thermal capacity and reducing neutrons leakage from the reactor core which results in improving economic indexes and increasing the reliability of the reactor performance as a whole.

The solution of the given problem can be ensured due to the fact that polytypical fuel elements in the heat-releasing assembly of the nuclear reactor with asymmetrical fuel distribution are made with different nuclides concentration in the reactor fuel, the fuel elements being arranged in such a way that they form two typical subcores ( sectors in plan ) with different values Of nuclear fuel volume-averaged nuclides concentration in the nuclear fuel relative to the plane passing through the central longitudinal axis of the assembly.

It is preferable that fuel elements should be made with identical as to chemical composition nuclear fuel.

Besides at least some fuel elements can contain fuel with depleting absorber.

Moreover the solution of the given problem can be ensured due to the fact that in the nuclear reactor containing a core where differently oriented assemblies with asymmetrical fuel material distribution among the fuel elements are placed. At least some heat-releasing assemblies are made according to the invention with forming two subcores with different values of nuclear fuel volume-arranged nuclides concentration which are oriented by the subcore with the lesser concentration of fissionable nuclides in the nuclear fuel in the direction of the central longitudional axis of the reactor core.

It is preferable that the heat-releasing assemblies of the core peripheral row bordering on the side reflector should be oriented by the subcore with the lesser concentration of the fissionable nuclides in the nuclear fuel in the direction from the central longitudinal axis of the core.

In the heat-releasing assembly there are two typical subcores having different values of nuclear fuel volume-averaged nuclides concentration in the nuclear fuel which are formed by the appropriate arrangement of polytypical fuel elements differing from each other by nuclides concentration in the nuclear fuel. The presence of the two subcores in the heat-releasing assembly results in asymmetrical in plan energy release distribution, and, with the filed orientation of the assemblies in the reactor at the expense of neutron's current redistribution among the subcores of an assembly it compensates the influence of neutron leakage through the side surface of the core and reduces the resulting nonuniformity of energy release radial distribution at the expense of reducing power of the semicylindrical (prismatic) part (subcore) of the assembly oriented towards the longitudinal axis of the reactor, makes additional opportunities for reducing neutrons leakage fulfilled according to the well-known above-mentioned principles and results in increasing the efficiency of using te nuclear fuel and in reliability of the reactor performance.

### BRIEF DESCRIPTION OF THE DRAWINGS.

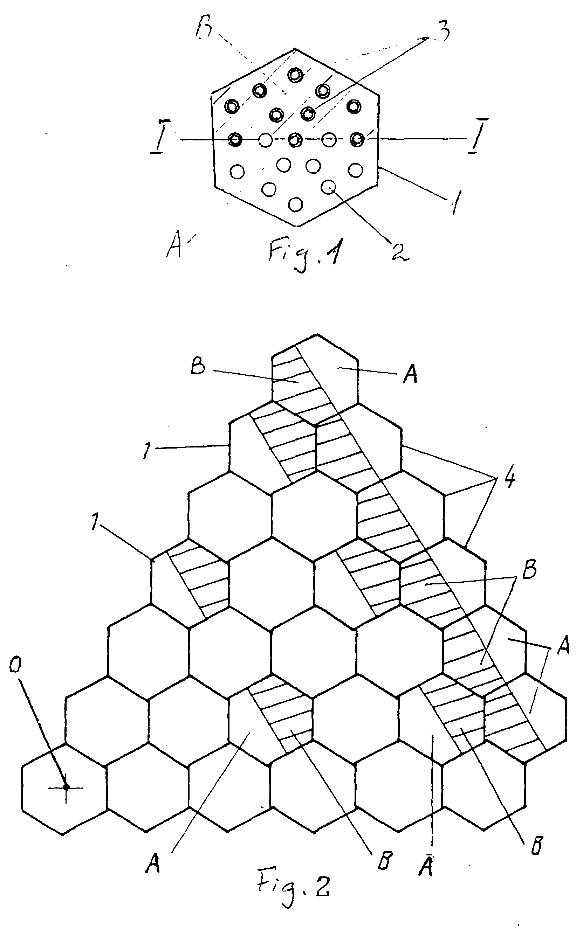

The scheme in figure 1 shows the general view of the "asymmetrical" in plan heat-releasing assembly.

The scheme in figure 2 shows a part of the reactor core in plan.

### THE BEST VERSION OF THE INVENTION DESIGN.

The heat-releasing "asymmetrical" assembly 1 contains placed in a uniform lattice polytypical fuel elements of at least two types 2 and 3 (fig.1) that can be filled with nuclear fuel with the similar chemical composition (e.g. uranium dioxide) but with different nuclides concentration. For example, the initial percentage of enrichment of uranium is 2,4 % for fuel elements 2 when using uranium dioxide and it is 3,6 % for fuel elements 3. The polytypical fuel elements 2 and 3 are distributed in the "asymmetrical" assembly 1 so that they form two typical semicylinder (prismatic) subcores A and B relative to the plane 1-1 passing through the central longitudinal axis of the assembly. The A and B subcores have a sector contour in plan and have substantially different values of nuclear fuel volume-averaged nuclides concentration in the nuclear fuel. Besides, at least some fuel elements 2 or 3 can be made with uranium-gadolinium fuel, e.g. to contain depleting absorber for local reducing the neutron current aimed to flattening energy release.

The heat-releasing assemblies 1 with filed asymmetrical in plan fuel distribution are arranged at least in a part of the reactor core with the proper orientation of the subcore A with the lesser nuclear fuel volume-averaged concentration of the fissionable nuclides in the direction of the central longitudional axis 0 of the core.

Some bordering on the side reflectors heat-releasing assemblies 4 of the peripheral row may have the opposite arrangement of the subcores for more efficient reducing neutrons leakage through the side surface of the core e.g. some assemblies 4 may be oriented in the direction of the longitudinal axis 0 of the core by the subcore B with the greater nuclear fuel volume-averaged concentration of the fissionable nuclides and accordingly in the direction from the central longitudinal axis 0 by the subcore A with the lesser nuclear fuel volume-averaged concentration of the fissionable nuclides.

The order of the fuel elements 2 and 3 arrangement while forming the subcores 1 (or 4) and accordingly the coordinates (location) of conventionally dividing plane 1-1 relative to its sides, the relation between nuclear fuel volume-averaged concentration of fissionable nuclides in the A and B subcores, the amount and particular orientation of each heat-releasing assembly 1 (or 4) in the reactor core can be determined by calculating - experimental method and can be changed with overloading after each reactor lifetime.

The nuclear reactor operates as follows.

During fuel overloading prior to a next lifetime e.g. in the VVER-1000 reactor some removed from the core fuel elements should be changed for fuel elements 1 with asymmetrical fuel distribution orienting them by the subcore with the lesser concentration of fissionable nuclides in the nuclear fuel in the direction of the central longitudinal axis 0 of the core. Such an arrangement of asymmetrical fuel elements 1 permits to form local asymmetrical energy release distribution in the operating reactor that being combined with distribution being formed by neutrons leakages ensures more uniform resulting energy release distribution in the reactor core.

## Claims

1. Heat-releasing nuclear reactor assembly with asymmetrical fuel distribution containing polytypical fuel elements characterized in that the fuel elements are made with different nuclides concentration in the nuclear fuel and situated so that they form two subcores with different values of nuclear fuel volume-averaged nuclides concentration in the nuclear fuel relative to the plane passing through the central longitudinal assembly axis.

2. Assembly as claimed in claim 1 characterized in that the fuel elements are made of identical as for chemical composition nuclear fuel.

3. Assembly as claimed in claim 1 characterized in that at least some fuel elements contain fuel with depleting absorber.

4. Nuclear reactor comprising a core with placed in it differently oriented heat-releasing assemblies with asymmetrical fuel material distribution among the fuel elements characterized in that at least some heat-releasing assemblies are made with forming two subcores with different values of nuclear fuel volume-averaged nuclides concentration, which are oriented by the subcore with a lesser fissionable nuclides concentration in the nuclear fuel in the direction of the central longitudinal axis of the reactor core.

5. Reactor as claimed in claim 4 characterized in that the heat-releasing assemblies of the reactor core peripheral row bordering on the side reflector are oriented by the subcore with the lesser fissionable nuclides concentration in the nuclear fuel in the direction from the central longitudinal axis of the reactor core.
